# EUROPÄISCHE PATENTSCHRIFT

(11) **EP 1 023 581 B1**
(45) Veröffentlichungstag und Bekanntmachung des Hinweises auf die Patenterteilung: **31.08.2005**
(21) Anmeldenummer: 98954393.9
(22) Anmeldetag: 12.10.1998
(51) Int. Cl.: G01N 1/06

(54) **MIKROTOM MIT MESSERHALTER UND MESSER**
MICROTOME WITH KNIFE HOLDER AND KNIFE
MICROTOME AVEC PORTE-LAME ET LAME

(30) Priorität: 13.10.1997 DE 19744983
(43) Veröffentlichungstag der Anmeldung: 02.08.2000
(73) Patentinhaber: Microm International GmbH, 69190 Walldorf (DE)
(72) Erfinder: BOROSIC, Drago, D-69214 Eppelheim (DE)
(74) Vertreter: Weber, Walter
(86) Internationale Anmeldenummer: PCT/EP1998/006437
(87) Internationale Veröffentlichungsnummer: WO 1999/019710

(56) Entgegenhaltungen:
- FR-A- 2 549 098
- US-A- 2 927 505
- US-A- 3 648 365
- US-A- 3 727 506
- US-A- 3 834 265
- US-A- 4 581 969
- US-A- 4 700 600

## Beschreibung

Die Erfindung betrifft ein Mikrotom zur Herstellung von Gewebeschnitten in der Histologie, bei dem zur Herstellung der Gewebeschnitte das zu schneidende Objekt an einem feststehenden Messer vorbeigeführt wird, mit einem Messer und einem Messerhalter mit einer Messeraufnahme zur Arretierung und Positionierung des Messers.

Mikrotome finden in der Histologie Anwendung und dienen der Herstellung von Gewebeschnitten, die dann unter dem Mikroskop untersucht werden. Zur Herstellung der Gewebeschnitte führt das Mikrotom das zu schneidende Objekt an einem feststehenden Messer vorbei, das sehr scharf sein muß und daher als austauschbare Klinge von einem Messerhalter gehalten wird.

Aus dem Prospekt "2040 AUTOCUT" der Firma Reichert-Jung ist ein Messerhalter der eingangs genannten Art bekannt, bei dem ein als längliche Klinge ausgebildetes Messer eingespannt wird. Um das Messer nicht ständig wechseln zu müssen, wurde es mit einer solchen Länge ausgebildet, daß es gegenüber dem Objekthalter verschoben werden kann, und auf diese Weise mehrere Bereiche der Klinge nacheinander in Einsatz gebracht werden können. Dies führte allerdings dazu, daß der Messerhalter eine große Breite aufweist, die unergonomisch ist. Insbesondere wird durch die große Breite das Abnehmen der Schnitte mit dem Finger behindert, und die an dem Gerät arbeitende Person hat keine Kontrolle darüber, welche Bereiche des Messers schon benutz wurden und welche noch scharf sind. Durch die Länge des Messers wird auch die Unfallgefahr erhöht, der man zwar durch einen Fingerschutz entgegenwirkt; dieser mach jedoch die Arbeit an dem Gerät umständlicher. Wenn auch verschiedene Bereiche der Klinge nacheinander zum Einsatz kommen, so ist die Klinge doch relativ schnell verbraucht und muß ausgewechselt werden.

Der Erfindung liegt die Aufgabe zugrunde, ein Mikrotom mit Messerhalter und Messer der eingangs genannten Art derart auszubilden, daß der Messerhalter ergonomisch ausgebildet werden kann, das Arbeiten einfacher und sicherer wird, sowie das Messer nicht so oft gewechselt werden muß.

Erfindungsgemäß wird die Aufgabe durch die Merkmale des Anspruchs 1 gelöst. Das Messer ist scheibenförmig, in Form eines regelmäßigen Vielecks ausgebildet, wobei die Kanten Schneiden sind; das Messer weist in der Mitte ein Loch für die Aufnahme in der Messeraufnahme auf, und die Messeraufnahme weist eine Achse auf, mittels der das Messer derart drehbar ist, daß die Schneiden zum Schneiden eines Objekts positionierbar sind.

Durch die Form des Messers als Vieleck kann der Messerhalter relativ schmal und dadurch auch ergonomisch ausgebildet werden. Ein solches Vieleck weist so viele Schneiden auf, wie es Kanten hat; beispielsweise stehen bei einer bevorzugten Achteckform acht Schneiden zu Verfügung. Obwohl dabei die einzelnen Schneiden kürzer sind, was die Unfallgefahr vermindert und eine Abdeckung durch einen Fingerschutz überflüssig macht, ist die Gesamtschneidenlänge des erfindungsgemäßen Messers erheblich größer als bei den eingangs erwähnten Messern. Das Messer muß nicht ständig gewechselt, sondern lediglich gedreht werden. Durch die Drehung des Messers läßt sich auch besser nachvollziehen, welche Teile schon benutzt und welche noch scharf sind. Um dies noch zu erleichtern, schlägt eine bevorzugte Ausführungsform vor, daß eine den Schneiden eines Messers zugeordnete Numerierung vorgesehen ist. Da das erfindungsgemäße Messer in seiner Fläche - also nicht seitlich - eingespannt ist, läßt sich seine Schneide nahezu zu hundert Prozent ausnutzen.

Eine besonders zweckmäßige Ausgestaltung sieht vor, daß der Messerhalter eine Senkung aufweist, wobei eine Öffnung dem Arbeitseinsatz einer der Schneiden dient, indem durch die Öffnung diese Schneide so übersteht, daß mit ihr ein Schnitt ausgeführt werden kann. Die Senkung dient zur Aufnahme des Messers und zum Schutz der nicht im Einsatz befindlichen Schneiden, wodurch die Unfallgefahr erheblich vermindert ist.

Die Messeraufnahme des Messerhalters kann auf verschiedene Weise ausgestaltet sein. Eine kreisrunde Einfräsung ist denkbar, in der sich das Messer mit geringem Spiel drehen läßt, wobei eine Klemmvorrichtung der Arretierung für die Durchführung des Schnitts dient. Zweckmäßigerweise wird die Messeraufnahme jedoch mit einer drehbaren Halterung für das Messer ausgestattet.

Eine vorteilhafte Ausgestaltung sieht vor, daß die drehbare Halterung ein Positionierelement für das Messer aufweist, durch das die Schneiden eines Messers in eine definierte Lage zur Halterung kommen. Ein solches Positionierelement kann als in eine Bohrung des Messers eingreifender, außerhalb der Mitte liegender Stift, als an die Achse, auf die das Messer gesteckt wird, angefügte Nase oder in anderer Weise ausgestaltet sein.

Eine große Arbeitserleichterung wird dadurch erzielt, daß die Messeraufnahme eine Raste für die drehbare Halterung aufweist, die immer dann einrastet, wenn sich eine Schneide in ihrer Schnittposition befindet. Dadurch ist das Messer nach jedem Weiterdrehen in der richtigen Schnittposition, eine Justage ist nicht erforderlich. Die Raste läßt sich dabei in beliebiger Weise ausbilden.

Die drehbare Halterung läßt sich derart ausgestalten, daß das Messer zwischen zwei Flächen derselben eingeklemmt wird, oder es ist möglich, daß die Messeraufnahme eine derart angeordnete plane Fläche aufweist, daß das Messer zwischen dieser und der drehbaren Halterung positionierbar ist. Die plane Fläche und die Achse können sich dabei am Messerhaltergehäuse befinden, oder es ist möglich, daß die Achse Teil der Halterung ist, die in eine Bohrung der planen Fläche eingefügt und dort verankert wird. Im ersten Fall wird das Messer zuerst auf die Achse gesteckt und dann die drehbare Halterung auf der Achse befestigt. Im zweiten Fall wird das Messer auf die Achse der drehbaren Halterung gesteckt und dann die Achse in das Messerhaltergehäuse eingefügt, wobei die Achse und/oder die Halterung drehbar, aber auch arretierbar gehalten ist. In beiden Fällen oder auch bei anderen Ausführungsformen ist es möglich, daß eine für die Drehung des Messers lösbare Arretierung zur Feststellung des Messers in den Schnittpositionen vorgesehen ist.

Die nahezu runde Form des Messers ermöglicht es, das Messerhaltergehäuse besonders ergonomisch auszubilden. Dabei ist der Raum, der für eine Schneide benötigt wird, relativ gering, und es ist möglich, daß das Messerhaltergehäuse links und rechts der Lagerung für die einsatzbereite Schneide angeschrägt oder abgerundet ist.

Entsprechend der Ausbildung des Messerhalters wird auch das Messer ausgebildet. Es kann ein einfaches Vieleck sein, das in eine runde oder in gleicher Vieleckform wie das Messer gestaltete Ausfräsung eingelegt wird. Es kann in der Mitte ein Vier- oder Sechskantloch für eine entsprechende Achse aufweisen oder eine Bohrung zum Aufstecken auf eine runde Achse. Im letzteren Fall ist es zweckmäßig, wenn das Messer einen Eingriff für ein Positionierelement der Messeraufnahme aufweist, entsprechend, wie oben beschrieben, als Bohrung, Kerbe für den Eingriff einer Nase oder in sonstiger Weise.

Die Erfindung wird nachfolgend anhand eines möglichen Ausführungsbeispiels erläutert, wobei auf weitere Ausgestaltungsmöglichkeiten verwiesen wird. Es zeigen
- **Fig. 1**: das Ausführungsbeispiel in Vorderansicht,
- **Fig.2**: eine drehbare Halterung und
- **Fig.3**: eine Teilansicht im Schnitt III-III

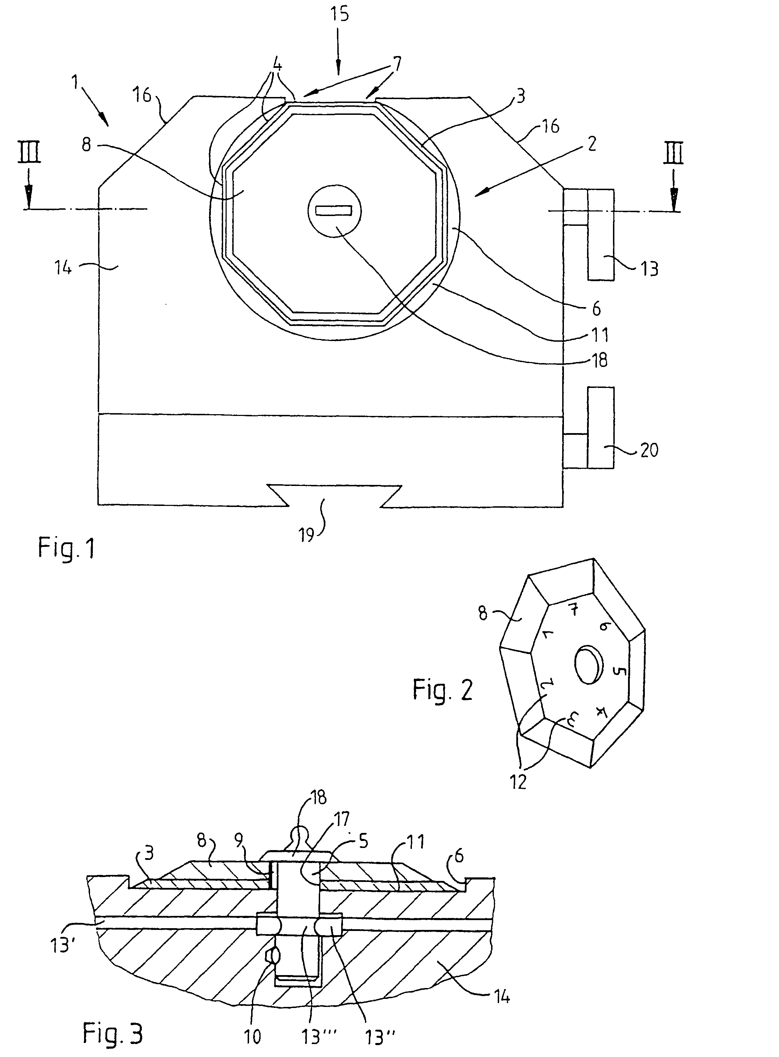

**Fig.1** zeigt einen Messerhalter 1 mit einer Messeraufnahme 2, in der ein Messer 3 gelagert ist, das die Form eines Achtecks aufweist. Das Messer 3 besitzt acht Schneiden 4, von denen sich eines in der Lagerung 15 für den Arbeitseinsatz befindet. Das Messer 3 wird von einer drehbaren Halterung 8 gehalten, indem es zwischen dieser und einer planen Fläche 11 des Messerhaltergehäuses 14 eingefügt ist. Ein Positionierelement 9 (Fig.3) dient dazu, daß das Messer 3 eine definierte Lage zur drehbaren Halterung 8 einnimmt. Durch Drehung der Halterung 8 kann jede beliebige Schneide 4 des Messers 3 zur Lagerung 15 gebracht werden. Für den Arbeitseinsatz wird das Messer 3 mit Hilfe einer Arretierung 13 festgeklemmt. Damit die nicht im Arbeitseinsatz befindlichen Schneiden 4 geschützt sind, befindet sich das Messer 3 in einer Senkung 6 des Messerhaltergehäuses 14, deren Boden die plane Fläche 11 bildet. Lediglich die für den Arbeitseinsatz bestimmte Schneide 4 befindet sich an einer Öffnung 7, der Senkung 6 am oberen Rand des Messerhaltergehäuses 14, wodurch diese Schneide 4 nach außen ragt und für einen Schnitt bereitsteht.

Zum Wechseln des Messers 3 wird die Arretierung 13 gelöst, der Verschluß 18 geöffnet und die drehbare Halterung 8 mit dem Messer 3 herausgenommen. Zum leichteren Arbeiten ist es zweckmäßig, die Halterung 8 aus magnetischen Material herzustellen, damit das Messer 3 an ihr haftet. Der Verschluß 18 kann als Gewinde- , Bajonettverschluß oder als eine sonstige schnell lösbare Verbindung hergestellt werden. Eine Führung 19 dient der Befestigung des Messerhalters 1 am Mikrotom, die Arretierung 20 der Festlegung in der gewünschten Position. Das Messerhaltergehäuse 14 kann durch Anschrägungen 16 oder durch Abrundungen ergonomisch ausgestaltet werden.

Die **Fig.2** zeigt eine drehbare Halterung 8, die mit einer Numerierung 12 ausgestattet ist, durch welche besser nachvollziehbar ist, welche Schneide 4 eines Messers 3 bereits benutzt wurde und welche noch scharf ist.

**Fig.3** zeigt eine Teilansicht in Form eines Schnittes III-III der Fig. 1. Dargestellt ist die Lagerung des Messers 3 im Messerhaltergehäuse 14. Das Messer 3 wird mit der Halterung 8 auf einer Achse 5 gesteckt und mittels eines Verschlusses 18 gehalten. Dabei dient ein Positionierelement 9, ausgebildet als Nase an der Achse 5 und als Kerben an Halterung 8 und Messer 3, dazu, die Position der Schneiden 4 gegenüber der Achse 5 und damit gegenüber einer Raste 10 festzulegen. Die Raste 10, ausgebildet als federbelastete Kugel oder in anderer Weise, greift derart in Einraststellen ein, daß die Schneiden 4 bei einer Drehung der Halterung 8 mit dem Messer 3 immer in die richtige Arbeitsposition gelangen. Für den Einsatz einer Schneide 4 wird das Messer 3 und die Halterung 8 mittels der Arretierung 13 festgelegt. Dazu wird bei dieser Ausführungsform eine Welle 13' mit einem Exzenter 13" vorgeschlagen, wobei letzterer in eine Nut 13''' der Achse 5 eingreift. Durch Betätigung des Hebels der Arretierung 13 kann auf diese Weise die Halterung 8 mit dem Messer 3 festgelegt oder zum Weiterdrehen oder Wechseln des Messers 3 gelöst werden.

Bei dem Mikrotom mit Messerhalter nach der Erfindung steht also die Drehachse der drehbaren Halterung 8, d.h. die Drehachse der Welle 13', senkrecht zur planen Fläche 11 des Messerhaltergehäuses 14 und damit senkrecht zu der Ebene der Schneiden 4 des im Messerhalter aufzunehmenden Messers 3. Zusätzlich zu dieser Drehachse für das Messer 3 kann der Messerhalter im Bereich des Messerhaltergehäuses 14 eine weitere klemmbare Drehachse zur Einstellung des Feiwinkels zwischen der Ebene des aufzunehmenden Messers 3 und dem zu schneidenden Präparat aufweisen; eine solche Drehachse liegt dann parallel zur planen Fläche 11 des Messerhaltergehäuses 14; vorzugsweise fällt eine solche Drehachse mit der Schneide 4, genauer gesagt mit deren Schneidkante, der in Arbeitsstellung befindlicher Schneide des Messers zusammen. Die technische Realisierung einer solchen Drehachse zur Freiwinkeleinstellung, beispielsweise indem das Messerhaltergehäuse 14 zwischen der Aufnahme für das Messer 3 und der Führung 19 entlang eines Teilstücks einer Zylindermantelfläche, deren Zylinderachse mit der Schneidkante der in Arbeitsstellung befindlichen Schneide des aufzunehmenden Messers zusammenfällt, geteilt ist, ist aus dem Stand der Technik bekannt und braucht deshalb an dieser Stelle nicht näher beschrieben zu werden.

Weiterhin braucht das Messer für das erfindungsgemäße Mikrotom mit Messerhalter nicht einstückig ausgebildet zu sein. Es ist auch denkbar, daß das Messer aus mehreren Teilen zusammengesetzt ist, z. B. indem das Messer aus einem vieleckigen Klingenhalter besteht, in dem entlang der Umfangskanten eine entsprechende Anzahl an Klingen aufgenommen ist.

Die dargestellte Ausführungsform ist lediglich beispielhaft. Wie oben bereits ausgeführt, sind zahlreiche weitere Ausführungsformen denkbar. Insbesondere für die Lagerung und die Auswechslung des Messers 3, sowie für die Ausbildung der Arretierung und Ausführung der Raste gibt es zahlreich Möglichkeiten.

## Patentansprüche

1. Mikrotom zur Herstellung von Gewebeschnitten in der Histologie, bei dem zur Herstellung der Gewebeschnitte das zu schneidende Objekt an einem feststehenden Messer vorbeigeführt wird, mit einem Messer (3) und einem Messerhalter mit einer Messeraufnahme (2) zur Arretierung und Positionierung des Messers (3),
**dadurch gekennzeichnet,**
**daß**
- das Messer scheibenförmig in Form eines regelmäßigen Vielecks ausgebildet ist, wobei die Kanten Schneiden (4) sind;
- das Messer in der Mitte ein Loch für die Aufnahme in der Messeraufnahme (2) aufweist; und
- die Messeraufnahme (2) eine Achse (5) aufweist, mittels der das Messer (3) derart drehbar ist, daß die Schneiden (4) zum Schneiden eines Objekts positionierbar sind.

2. Mikrotom nach Anspruch 1,
**dadurch gekennzeichnet,**
**daß** der Messerhalter (1) eine Senkung (6) zur Aufnahme des Messers (3) und zum Schutz der Schneiden (4) aufweist, wobei eine Öffnung (7) dem Arbeitseinsatz einer der Scheiden (4) dient.

3. Mikrotom nach Anspruch 1 oder 2,
**dadurch gekennzeichnet,**
**daß** die Messeraufnahme (2) mit einer drehbaren Halterung (8) für das Messer (3) ausgestattet ist.

4. Mikrotom nach Anspruch 3,
**dadurch gekennzeichnet,**
**daß** die drehbare Halterung (8) ein Positionierelement (9) für das Messer (3) aufweist, durch das die Schneiden (4) eines Messers (3) in eine definierte Lage zur Halterung (8) kommen.

5. Mikrotom nach Anspruch 4,
**dadurch gekennzeichnet,**
**daß** der Messerhalter (1) eine Raste (10) für die drehbare Halterung (8) aufweist, die immer dann einrastet, wenn sich eine Schneide (4) in ihrer Schnittposition befindet.

6. Mikrotom nach einem der Ansprüche 3 bis 5,
**dadurch gekennzeichnet,**
**daß** die Messeraufnahme (2) eine derart angeordnete plane Fläche (11) aufweist,
**daß** das Messer (3) zwischen dieser und der drehbaren Halterung (8) positionierbar ist.

7. Mikrotom nach einem der Ansprüche 1 bis 6,
**dadurch gekennzeichnet,**
**daß** eine den Schneiden (4) eines Messers (3) zugeordnete Numerierung (12) vorgesehen ist.

8. Mikrotom nach einem der Ansprüche 1 bis 7,
**dadurch gekennzeichnet,**
**daß** eine für die Drehung des Messers (3) lösbare Arretierung (13) zur Feststellung des Messers (3) in den Schnittpositionen vorgesehen ist.

9. Mikrotom nach einem der Ansprüche 1 bis 8,
**dadurch gekennzeichnet,**
**daß** es ein Messerhaltergehäuse (14) aufweist, das links und rechts einer Lagerung (15) für die einsatzbereite Schneide (4) angeschrägt (16) ist.

10. Mikrotom nach einem der Ansprüche 1 bis 8,
**dadurch gekennzeichnet,**
**daß** es ein Messerhaltergehäuse (14) aufweist, das links und rechts einer Lagerung (15) für die einsatzbereite Schneide (4) abgerundet ist.

11. Mikrotom nach Anspruch 1 bis 10,
**dadurch gekennzeichnet,**
**daß** das Messer einen Eingriff für ein Positionierelement (9) der Messeraufnahme (2) aufweist.

12. Mikrotom nach einem der Ansprüche 1 bis 11,
**dadurch gekennzeichnet,**
**daß** das Messer als Achteck ausgebildet ist.

## Claims

1. A microtome for making tissue sections for histological purposes, in which the object to be cut for making the tissue sections is moved past a stationary knife, comprising a knife (3) and a knife holder having knife accommodating means (2) for arresting and positioning said knife (3),
**characterized in that**
• said knife is in the form of a disc-shaped regular polygon and its edges are cutting edges (4);
• said knife has a hole in the center for accommodation thereof in said knife accommodating means (2); and
• said knife accommodating means (2) exhibits an axis (5), by means of which said knife (3) can be rotated such that said cutting edges (4) can be positioned for cutting an object.

2. A microtome as defined in claim 1,
**characterized in that**
said knife holder (1) has a counterbore (6) for the accommodation of said knife (3) and for the protection of said cutting edges (4), an opening (7) serving to allow operation of one of said cutting edges (4).

3. A microtome as defined in claim 1 or claim 2,
**characterized in that**
said knife accommodating means (2) is equipped with a rotatable holder (8) for said knife (3).

4. A microtome as defined in claim 3,
**characterized in that**
said rotatable holder (8) has a positioning element (9) for said knife (3), by means of which said cutting edges (4) of said knife (3) are moved to a defined position relative to said holder (8).

5. A microtome as defined in claim 4,
**characterized in that**
said knife holder (1) has a catch (10) for said rotatable holder (8), which catch snaps into a locking position whenever a cutting edge (4) is in its cutting position.

6. A microtome as defined in any one of claims 3 through 5,
**characterized in that**
said knife accommodating means (2) has a plane surface (11) that is disposed in such a manner that said knife (3) can be positioned between it and said rotatable holder (8).

7. A microtome as defined in any one of claims 1 through 6,
**characterized in that**
said cutting edges (4) of a knife (3) are provided with numbers (12).

8. A microtome as defined in any one of claims 1 through 7,
**characterized in that**
an arrestment device (13) which can be released to allow rotation of said knife (3) is provided for fixing said knife (3) in its cutting positions.

9. A microtome as defined in any one of claims 1 through 8,
**characterized in that**
it has a knife-holder housing (14) which is chamfered (16) to the left and to the right of a bearing (15) for accommodation of said cutting edge when in position ready for use (4).

10. A microtome as defined in any one of claims 1 through 8,
**characterized in that**
it has a knife-holder housing (14) which is rounded to the left and to the right of a bearing (15) for accommodating said cutting edge when in position ready for use (4).

11. A microtome as defined in claim from 1 through 10,
**characterized in that**
said knife has engaging means for a positioning element (9) of said knife accommodating means (2).

12. A microtome as defined in any one of claims 1 through 11,
**characterized in that**
said knife is in the form of an octagon.

## Revendications

1. Microtome pour la fabrication de coupes tissulaires en histologie, où pour la fabrication des coupes tissulaires, l'objet à couper est passé le long d'une lame fixe, comprenant un couteau (3) et un porte-couteau avec un logement de couteau (2) pour le blocage et le positionnement du couteau (3),
**caractérisé en ce que**
- le couteau est réalisé en forme de disque polygonal régulier, les bords étant des lames (4);
- le couteau présentant un trou au milieu pour recevoir le logement de couteau (2); et
- le logement de couteau (2) présentant un axe (5), au moyen duquel le couteau (3) est rotatif de sorte que les lames (4) sont positionnables pour couper un objet.

2. Microtome selon la revendication 1, **caractérisé en ce que** le porte-couteau (1) présente une dépression (6) pour le logement du couteau (3) et pour la protection des couteaux (4), une ouverture (7) servant d'insert de travail de l'une des lames (4).

3. Microtome selon la revendication 1 ou 2, **caractérisé en ce que** le logement de couteau (2) est muni d'un support rotatif (8) pour le couteau (3).

4. Microtome selon la revendication 3, **caractérisé en ce que** le support rotatif (8) présente un élément de positionnement (9) pour le couteau (3) qui permet d'amener les lames (4) d'un couteau (3) au support (8) dans une position définie.

5. Microtome selon la revendication 4, **caractérisé en ce que** le porte-couteau (1) présente un cran d'arrêt (10) pour le support rotatif (8) qui s'enclenche à chaque fois qu'une lame (4) se trouve dans sa position de coupe.

6. Microtome selon l'une des revendications 3 à 5, **caractérisé en ce que** le couteau (3) est positionnable entre le support rotatif (8) et une surface plane (11) disposée en conséquence sur le logement de couteau (2)

7. Microtome selon l'une des revendications 1 à 6, **caractérisé en ce qu'**il est prévu une numérotation (12) associée aux lames (4) d'un couteau (3).

8. Microtome selon l'une des revendications 1 à 7, **caractérisé en ce qu'**il est prévu un blocage (13) amovible pour la rotation du couteau (3) pour la fixation du couteau (3) dans les positions de coupe.

9. Microtome selon l'une des revendications 1 à 8, **caractérisé en ce qu'**il présente un carter de porte-couteau (14) qui est chanfreiné (16) à gauche et à droite d'un logement (15) pour la lame prête à l'emploi (4).

10. Microtome selon l'une des revendications 1 à 8, **caractérisé en ce qu'**il présente un carter de porte-couteau (14) qui est arrondie à gauche et à droite d'un logement (15) pour la lame prête à l'emploi (4).

11. Microtome selon l'une des revendications 1 à 10, **caractérisé en ce que** le couteau présente une encoche pour un élément de positionnement (9) du logement de couteau (2).

12. Microtome selon l'une des revendications 1 à 11, **caractérisé en ce que** le couteau est réalisé comme un octogone.
